(19) **Europäisches Patentamt**
**European Patent Office**
**Office européen des brevets**

(11) **EP 2 623 711 A2**

(12) **EUROPEAN PATENT APPLICATION**

(43) Date of publication:
**07.08.2013 Bulletin 2013/32**

(51) Int Cl.:
*F01D 1/24* (2006.01)        *B64C 11/48* (2006.01)
*F01D 7/00* (2006.01)        *F02C 9/58* (2006.01)

(21) Application number: **13154022.1**

(22) Date of filing: **05.02.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **06.02.2012 US 201261595431 P**
**11.10.2012 US 201213649478**

(71) Applicant: **General Electric Company**
**Schenectady, New York 12345 (US)**

(72) Inventors:
• **Lu, Manxue**
**Swampscott, MA Massachusetts 01907 (US)**
• **Carpenter, Sheldon**
**Hamilton, OH Ohio 45011 (US)**

(74) Representative: **Williams, Andrew Richard**
**GPO Europe**
**GE International Inc.**
**The Ark**
**201 Talgarth Road**
**Hammersmith**
**London W6 8BJ (GB)**

(54) **Method and apparatus for non-model based control for counter-rotating open-rotor gas turbine engine**

(57)     A simple, robust and systematic control solution for open rotor control with a differential gearbox is disclosed. When the two counter rotating rotors of a CROR engine are conditioned by the differential gearbox, the two rotors speeds are coupled for given input torque. The solution provided by the current disclosure mathematically decouples these two rotors by transforming the original individual actuator input and speed output into differential & average input and output. Because the newly formed control system representation of the plant has decoupled input/output mapping, it follows that the simple SISO control can be applied. Furthermore, the current control solutions allow a simple and well-coordinated speed phase synchronizing among the four rotors on a two-engine vehicle.

FIG. 2

EP 2 623 711 A2

**Description**

BACKGROUND OF THE INVENTION

The present disclosure pertains to counter-rotating open-rotor (CROR) gas turbine engines; and, more specifically, control system implementations for such CROR gas turbine engines utilizing a differential gearbox mechanically coupling the two counter-rotating rotors. When the two counter rotating rotors of a CROR engine are conditioned by the differential gearbox, a control challenge arises as the two rotors speeds are coupled for given input torque.

The current disclosure provides control solutions addressing such problems and relationships.

BRIEF DESCRIPTION OF THE INVENTION

The current disclosure provides a simple, robust and systematic solution for open rotor control with a differential gearbox. When the two counter rotating rotors of a CROR engine are conditioned by the differential gearbox, the two rotors speeds are coupled for given input torque. A solution provided by the current disclosure mathematically decouples these two rotors by transforming the original individual actuator input and speed output into differential & average input and output. Because the newly formed control system representation of the plant has decoupled input/output mapping, it follows that the simple SISO control can be applied. Furthermore, the current control solutions allow a simple and well-coordinated speed phase synchronizing among the four rotors on a two-engine vehicle.

According to the current disclosure, a counter-rotating open-rotor gas turbine engine includes: a forward un-ducted rotor including a plurality of forward rotor blades and including a forward rotor angle actuator for setting blade pitch angles of the plurality of forward rotor blades; an aft un-ducted rotor including a plurality of aft rotor blades and including an aft rotor angle actuator for setting blade pitch angles of the plurality of aft rotor blades; a differential gearbox mechanically coupled between the forward and aft un-ducted rotors so that rotor speeds of the respective forward and aft un-ducted rotors are coupled for a given input torque; a gas turbine engine driving the differential gearbox and including a fuel actuator for setting the fuel flow to the gas turbine engine; and an open rotor control system including, a forward rotor blade pitch angle command (BetaF) electrically connected to the forward rotor angle actuator, an aft rotor blade pitch angle command (BetaA) electrically connected to the aft rotor angle actuator, a fuel flow command (Wf) electrically connected to the fuel actuator, a forward rotor speed feedback signal (Nf), an aft rotor speed feedback signal (Na), and an engine pressure measurement feedback signal (EPR); where the open rotor control system may include a control algorithm that mathematically decouples the forward rotor speed reference signal (NfR) and aft rotor speed reference signal (NaR) into differential speed reference signal (NdR) and average speed reference signal (NcR) and decouples the forward rotor speed feedback signal (Nf) and aft rotor speed feedback signal (Na) into differential speed feedback signal (Nd) and average speed feedback signal (Nc) and mathematically decouples the forward blade pitch angle command (BetaF) and aft rotor blade pitch angle command (BetaA) into differential blade pitch angle command (BetaD) and average blade pitch angle command (BetaC).

In a more detailed embodiment the open rotor control system may include a differential speed regulator having an input of the differential speed feedback signal (Nd) and an output of the differential blade pitch angle command (BetaD); and an average speed regulator having an input of the average speed feedback signal (Nc) and an output of the average blade pitch angle command (BetaC). In a further detailed embodiment, the open rotor control system may convert the differential blade pitch angle command (BetaD) and average blade pitch angle command (BetaC) into the forward rotor angle blade pitch angle command (BetaF) and the aft rotor blade pitch angle command (BetaA).

In an embodiment, the differential speed regulator and the average speed regulator may be single-input-single-output (SISO) regulators, and the open rotor control system may further include a speed phase synchronizing control architecture positioned between forward and aft rotor phase output signals and input signals to one or more of the differential and average speed regulators.

In an embodiment, the control algorithm of the open rotor control system may treat the fuel flow impact on rotor speeds as a known disturbance and rejected by the average speed regulator.

According to the current disclosure, a counter-rotating open-rotor gas turbine engine includes: a forward un-ducted rotor including a plurality of forward rotor blades and including a forward rotor angle actuator for setting blade pitch angles of the plurality of forward rotor blades; an aft un-ducted rotor including a plurality of aft rotor blades and including an aft rotor angle actuator for setting blade pitch angles of the plurality of aft rotor blades; a differential gearbox mechanically coupled between the forward and aft un-ducted rotors so that rotor speeds of the respective forward and aft un-ducted rotors are coupled for a given input torque; and an open rotor control system that includes forward and aft output signals respectively electrically coupled to the forward rotor angle actuator and the aft rotor angle actuator, and receiving forward and aft feedback input signals; where the open rotor control system may include a control algorithm that mathematically decouples the forward and aft output signals into differential and average output signals and mathematically decouples the forward and aft feedback input signals into differential and average feedback input signals. In a more detailed embodiment, the open rotor control system may include single-input-single-output (SISO) regulators receiving the differential and average feedback input signals, respectively and outputting the differential and average output signals.

Further, according to the current disclosure, a method is disclosed for controlling a counter-rotating open-rotor gas turbine engine, where the counter-rotating open-rotor gas turbine engine includes, (a) a forward un-ducted rotor including a plurality of forward rotor blades and including a forward rotor angle actuator for setting blade pitch angles of the plurality of forward rotor blades, (b) an aft un-ducted rotor including a plurality of aft rotor blades and including an aft rotor angle actuator for setting blade pitch angles of the plurality of aft rotor blades, (c) a differential gearbox mechanically coupled between the forward and aft un-ducted rotors so that rotor speeds of the respective forward and aft un-ducted rotors are coupled for a given input torque. The method may include steps of (not necessarily performed in any specific order): generating forward and aft control signals respectively for the forward rotor angle actuator and the aft rotor angle actuator; and receiving forward and aft feedback input signals; where the step of generating the forward and aft control signals utilizes a control solution that mathematically decouples the forward and aft control signals into differential and average control signals and mathematically decouples the forward and aft feedback input signals into differential and average feedback input signals. In a more detailed embodiment the differential and average control signals may be generated by a single-input-single-output (SISO) regulator based at least upon the differential and average feedback input signals. Alternatively, or in addition, the forward and aft output signals may include a forward blade pitch angle command and an aft blade pitch angle command; the forward and aft feedback input signals may include a forward rotor speed reference signal and an aft rotor speed reference signal; the differential feedback input signal may be a differential speed reference signal and the average speed feedback input signal may be an average speed reference signal; and the differential output signal may be a differential blade pitch angle command and the average output signal may be an average blade pitch angle command. Alternatively, or in addition, the method may further include the step of rejecting fuel flow impact on rotor speeds as a known disturbance. Alternatively, or in addition, the method may further include a step of providing a speed phase synchronizing control architecture positioned between (a) at least one of the forward and aft output signals and (b) at least one of the forward and aft feedback input signals. Alternatively, or in addition, the control solution may mathematically decouple the forward and aft output signals into differential and average output signals utilizing a variable transformation, and may mathematically decouple the forward and aft feedback input signals into differential and average feedback input signals utilizing a variable transformation.

Additionally, the scope of the current disclosure includes any control systems described herein and/or any method described herein.

## BRIEF DESCRIPTION OF THE DRAWINGS

Fig. 1 is a schematic block diagram representation of a basic control system architecture for a counter-rotating open-rotor (CROR) gas turbine engine;
Fig. 2 is another schematic block diagram representation of a basic control system architecture for a counter-rotating open-rotor (CROR) gas turbine engine;
Fig. 3 is a matrix representation of controlled plant input and output mapping for the CROR of Figs. 1 and 2;
Fig. 4 is a matrix representation of a control system approach according to an embodiment of the invention disclosed herein;
Fig. 5 is a block diagram representation of a control system structure according to an embodiment of the invention disclosed herein;
Fig. 6 is a block diagram representation of a control system structure according to another embodiment of the invention disclosed herein; and
Fig. 7 is a block diagram representation of a control system structure according to another embodiment of the invention disclosed herein.

## DETAILED DESCRIPTION

The current disclosure provides a simple, robust and systematic solution for open rotor control with a differential gearbox. When the two counter rotating rotors of a CROR engine are conditioned by the differential gearbox, the two rotors speeds are coupled for given input torque. The solution provided by the current disclosure mathematically decouples these two rotors by transforming the original individual actuator input and speed output into differential & average input and output. Because the newly formed control system representation of the plant has decoupled input/output mapping, it follows that the simple SISO control can be applied. Furthermore, the current control solutions allow a simple and well-coordinated speed phase synchronizing among the four rotors on a two-engine vehicle. The current disclosure employs a variable transformation to mathematically decouple rotor speeds to allow application of SISO control for the transformed and decoupled rotor speeds. Further, in this solution, fuel flow command Wf can be treated as a known disturbance and rejected.

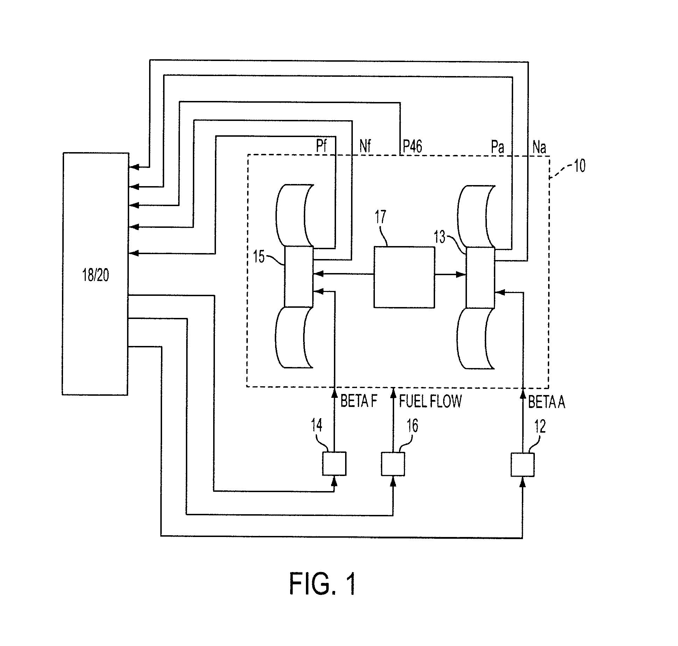

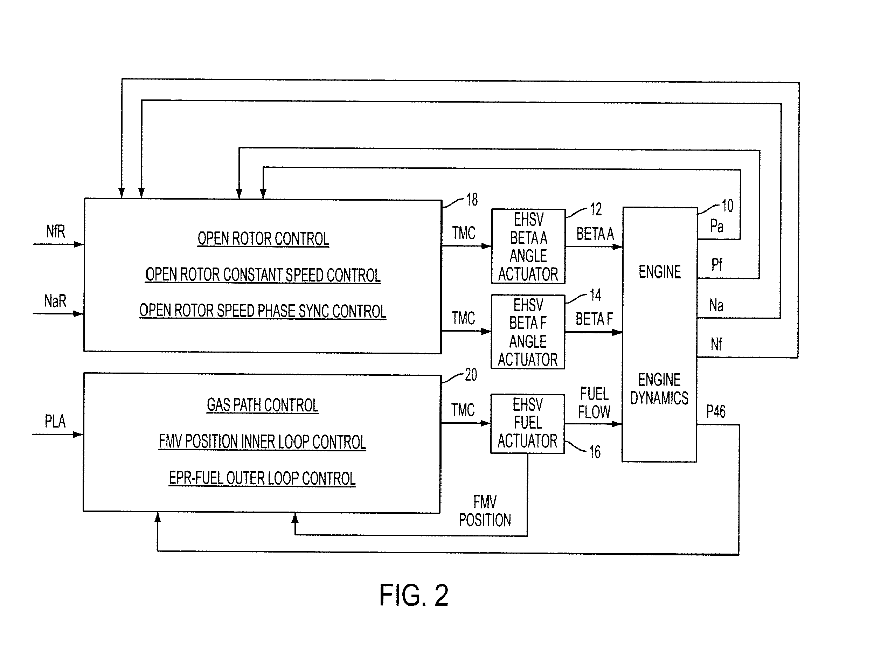

The basic control system architecture for CROR is presented in Figs. 1 and 2. As shown in Figs. 1 and 2, the CROR gas turbine engine 10 includes a differential gearbox 17 mechanically coupled between a forward un-ducted rotor 15 and an aft un-ducted rotor 13, so that the rotor speeds of the respective forward and aft un-ducted rotors 15, 13 are coupled for a given input torque. The CROR gas turbine engine includes a fuel actuator 16 for setting the fuel flow to the engine and gear box 17. The CROR gas turbine engine 10 includes (on a very basic level) three inputs: **BetaF** and **BetaA,** which are the forward and aft rotor actuator pitch angle input signals, respectively provided by the forward and aft blade pitch angle actuators 14 and 12; and **Wf,** which is the fuel flow input signal provided by the fuel flow actuator 16. Outputs (again, on a very basic level) from the CROR gas turbine engine 10 include **Pa** and **Pf,** which are aft and forward rotor speed phase feedback signal output, **Na** and **Nf,** which are the aft and forward rotor speed signal outputs, and **P46,** which is a pressure signal output (an indication of core engine power). The control system includes an open rotor control section 18 and a gas path control section 20. Inputs to the open rotor control section 18 include **Pa, Pf, Na** and **Nf** feedback signals from the engine 10; and inputs to the gas path control section 20 include **P46** feedback signal from the engine 10 and an **FMV** position signal from the fuel actuator 16.

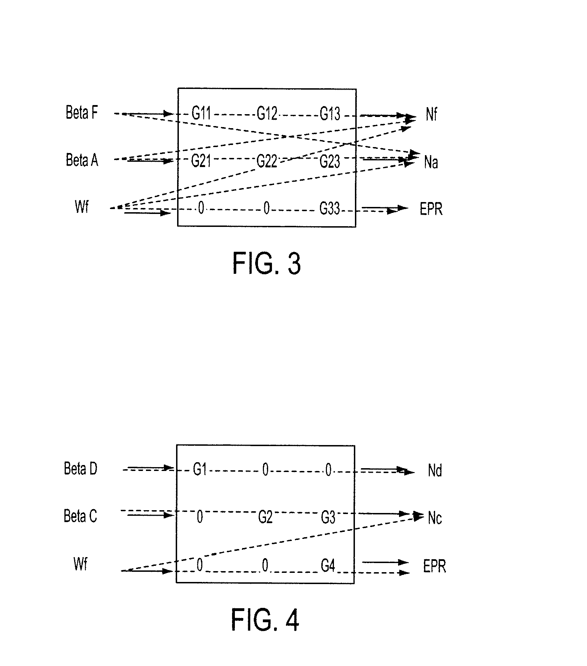

For CROR control, the two counter-rotating rotors are functionally coupled to each other, and their operation is further impacted by fuel flow. For example, the controlled plant input and output mapping for the CROR can be represented in general as shown in Fig. 3 matrix, where **Nf** and **Na** are the forward and aft rotor speed signals outputs, **BetaF** and **BetaA** are the forward and aft rotor actuator pitch angle actuator input signals, **Wf** if the fuel flow actuator signal, and **EPR** is an engine pressure ratio signal.

Previous approaches to solve this problem have ignored the interactions between the forward and aft rotor speed signals, **Nf** and **Na,** and have attempted to utilize single-input-single-output control to attempt to maintain each rotor speed tracking their own reference. However, as shown in the controlled plant matrix of Fig. 3, the interactions between the six signals will impact the rotors' constant speed holding control and the rotors' speed phase synchronizing significantly, because this coupling always exists and is enforced by the differential gearbox mechanically coupling the two rotors.

Referring back to Fig. 3, **Nf** and **Na** are coupled, **Wf** affects **Nf** and **Na,** and it is assumed that **EPR** is not impacted by **BetaF** and **BetaA.** Since **G12** ≈ **-G11, G21** ≈ **- G22, G13** ≈ 0, and **G23** ≈ 0, the following variable transformation for input and outputs and associated I/O mapping may be considered:

$$\mathbf{BetaD = (BetaF - BetaA)/2}$$

$$\mathbf{BetaC = (BetaF + BetaA)/2}$$

$$\mathbf{Nd = (Nf/MaxNf - Na/MaxNa)*NtR}$$

$$\mathbf{Nc = (Nf/MaxNf + Na/MaxNa)*NtR}$$

Where **BetaD** is differential blade pitch angle input, **BetaC** is common/average blade pitch angle input, **Nd** is differential speed, **Nc** is common/average speed, and **NtR** is given target speed for the rotors.

As a result, the new control system architecture can be presented by the control matrix of Fig. 4. Referring to Fig. 4, **(BetaD , Nd)** is decoupled from **(BetaC, Nc)** and **(Wf, EPR).** Even though **(BetaC, Nc)** is coupled with **(Wf, EPR), Wf** can be simply treated as a known disturbance to **(BetaC, Nc)** and thus be rejected from **(BetaC, Nc)** control. From this transformation, therefore, **(BetaD, Nd), (BetaC, Nc)** and **(Wf, EPR)** can be controlled using SISO control techniques.

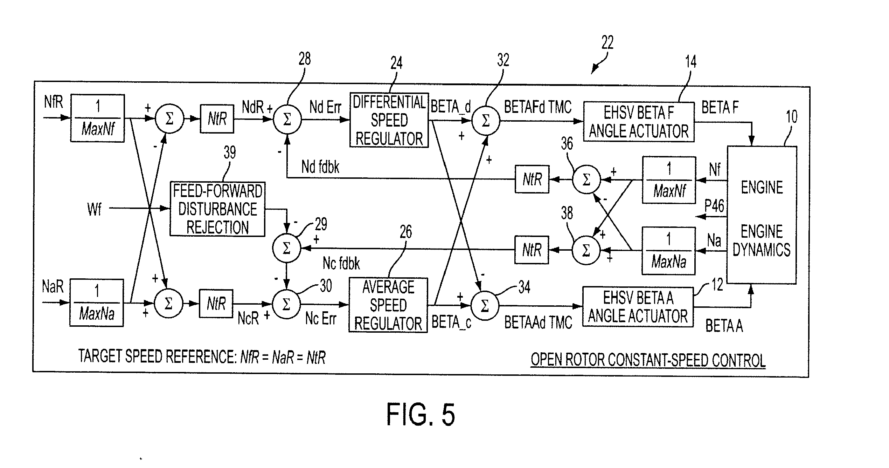

The open rotor constant speed control architecture 22 based upon the new defined inputs and outputs presented in Fig. 4 is represented in Fig. 5. The open rotor constant speed control architecture 22 includes a differential speed regulator 24 and an average speed regulator 26. The differential speed regulator 24 may provide SISO control (e.g., PID) for the differential blade pitch angle signal (BetaD) based upon the differential speed feedback signal (Nd fdbk) combined (at point 28) with a target speed reference signal (NdR), while the average speed regulator 26 may provide SISO control (e.g., PID) for the average blade pitch angle signal (BetaC) based upon the average speed feedback signal (Nc fdbk) differentially combined (at point 30) with a common target speed reference signal (NcR). The average blade pitch angle signal (BetaC) is commonly combined (at point 32) with differential blade pitch angle signal (BetaD) to provide the forward blade angle command signal (BetaFd) to blade pitch angle actuator 14, and the differential blade pitch angle signal (BetaD) is differentially combined with average blade pitch angle signal (BetaC) (at point 34) to provide aft blade angle command signal (BetaAd) to blade pitch angle actuator 12. Forward speed sensed signal (Nf) and aft speed sensed signal (Na) is differentially combined (at point 36) to provide the differential speed feedback signal (Nd); and forward speed sensed signal (Nf) and aft speed sensed signal (Na) is commonly combined (at point 38) to provide the average speed feedback signal (Nc). Fuel flow (Wf) disturbance rejection with respect to this architecture is shown with respect to block 39, the output of which may be differentially combined with the average speed feedback signal (Nc fdbk) at point 37.

In the case of a rotor failure (which may require the rotor to be frozen in the engine), simple logic may be provided to turn off the differential speed regulator 24, and set the failed rotor speed reference to 0. As a result, the average speed regulator 26 will govern the remaining working rotor to the target speed.

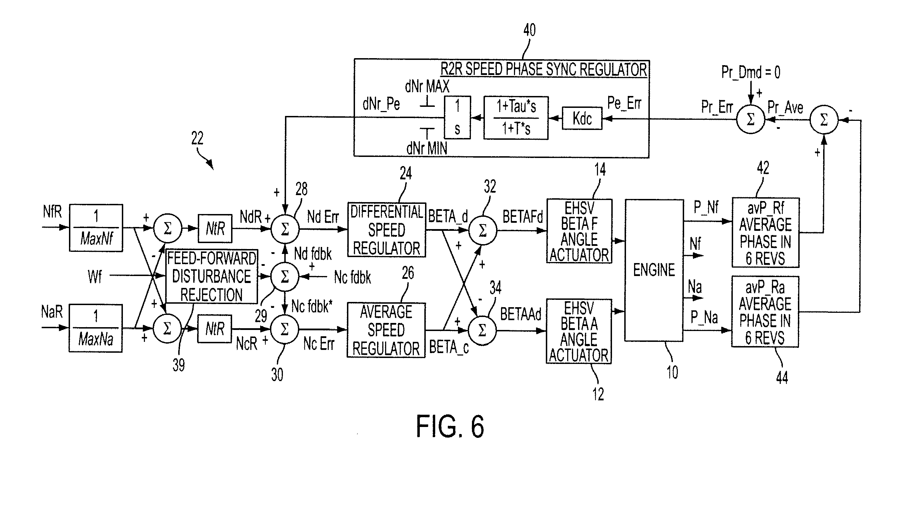

Fig. 6 illustrates how the open rotor constant speed control architecture 22 provides for the incorporation of a speed phase sync regulator control structure 40 inserted between forward and aft rotor phase output signals (blocks 42 and 44, producing average phase in six revolutions, avP_BRf & avP_BRa, respectively) from the engine 10 and input signals to the differential speed regulator 24 and/or to the average speed regulator 26 (for example, combined at point 28 as shown, or, alternatively, at point 30). With the speed phase synchronizing structure 40: for rotor to rotor speed phase sync per engine, the sync control is to bias the differential speed regulator input; for engine to engine speed phase sync, the sync control is to bias the slave engine average speed regulator input. This is directly related with the originally defined differential speed and average speed.

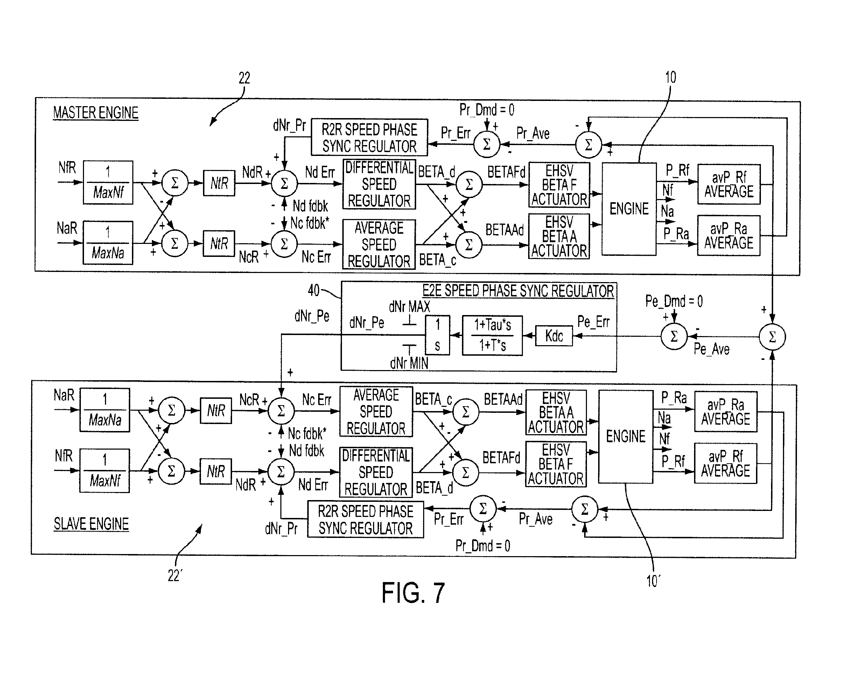

Fig. 7 illustrates the addition of a second open rotor control architecture 22' for a second engine 10', again utilizing speed phase sync regulator control structure 40. For speed phase sync for both engines 10 & 10' and two counter rotating rotors per engine, based on the differential speed and average speed control concepts as described, the sync control method is established to adjust forward rotor and rear rotor differential speed to sync the two rotors for a given engine without altering the base average speed - rotor-to-rotor (R2R) sync, and create engine-to-engine (E2E) sync logic to determine E2E sync trigger, and adjust slave engine average speed to sync the two engines - engine-to-engine (E2E) sync.

It is to be understood the control system architectures disclosed herein may be provided in any manner known to those of ordinary skill, including software solutions, hardware or firmware solutions, and combinations of such. Such solutions would incorporate the use of appropriate processors, memory (and software embodying any algorithms described herein may be resident in any type of non-transitory memory), circuitry and other components as is known to those of ordinary skill.

Having disclosed the inventions described herein by reference to exemplary embodiments, it will be apparent to those of ordinary skill that alternative arrangements and embodiments may be implemented without departing from the scope of the invention(s) as described herein. Further, it will be understood that it is not necessary to meet any of the objects or advantages of the invention(s) stated herein to fall within the scope of such invention(s), because undisclosed or unforeseen advantages may exist.

Various aspects and embodiments of the invention are indicated in the following clauses:

1. A counter-rotating open-rotor gas turbine engine comprising:

a forward un-ducted rotor including a plurality of forward rotor blades and including a forward rotor angle actuator for setting blade pitch angles of the plurality of forward rotor blades;

an aft un-ducted rotor including a plurality of aft rotor blades and including an aft rotor angle actuator for setting blade pitch angles of the plurality of aft rotor blades;

a differential gearbox mechanically coupled between the forward and aft un-ducted rotors so that rotor speeds of the respective forward and aft un-ducted rotors are coupled for a given input torque;

a gas turbine engine driving the differential gearbox and including a fuel actuator for setting the fuel flow to the gas turbine engine; and

an open rotor control system including, a forward rotor blade pitch angle command (BetaF) electrically connected to the forward rotor angle actuator, an aft rotor blade pitch angle command (BetaA) electrically connected to the aft rotor angle actuator, a fuel flow command (Wf) electrically connected to the fuel actuator, a forward rotor speed feedback signal (Nf), an aft rotor speed feedback signal (Na), and two engine pressure measurement feedback signals for calculating engine pressure ratio (EPR);

the open rotor control system including a control algorithm that mathematically decouples the forward rotor speed reference signal (NfR) and aft rotor speed reference signal (NaR) into differential speed reference signal (NdR) and average speed reference signal (NcR) and decouples the forward rotor speed feedback signal (Nf) and aft rotor speed feedback signal (Na) into differential speed feedback signal (Nd) and average speed feedback signal (Nc) and mathematically decouples the forward blade pitch angle command (BetaF) and aft rotor blade pitch angle command (BetaA) into differential blade pitch angle command (BetaD) and average blade pitch angle command (BetaC).

2. The counter-rotating open-rotor gas turbine engine of clause 1, wherein the open rotor control system includes:

a differential speed regulator having an input of the differential speed feedback signal (Nd) and an output of the differential blade pitch angle command (BetaD); and

an average speed regulator having an input of the average speed feedback signal (Nc) and an output of the average blade pitch angle command (BetaC).

3. The counter-rotating open-rotor gas turbine engine of clause 2, wherein the open rotor control system converts the differential blade pitch angle command (BetaD) and average blade pitch angle command (BetaC) into the forward rotor angle blade pitch angle command (BetaF) and the aft rotor blade pitch angle command (BetaA).

4. The counter-rotating open-rotor gas turbine engine of clause 2, wherein the differential speed regulator and the average speed regulator are single-input-single-output (SISO) regulators.

5. The counter-rotating open-rotor gas turbine engine of clause 4, wherein the open rotor control system further includes a speed phase synchronizing control architecture positioned between (a) forward and aft rotor phase output signals and (b) input signals to one or more of the differential and average speed regulators.

6. The counter-rotating open-rotor gas turbine engine of clause 2, wherein control algorithm of the open rotor control system treats the fuel flow impact on rotor speeds as a known disturbance and rejected by the average speed regulator.

7. The counter-rotating open-rotor gas turbine engine of clause 1, wherein the control algorithm mathematically decouples the forward rotor speed reference signal (NfR) and aft rotor speed reference signal (NaR) into differential speed reference signal (NdR) and average speed reference signal (NcR) utilizing a variable transformation, and mathematically decouples the forward rotor speed feedback signal (Nf) and aft rotor speed feedback signal (Na) into differential speed feedback signal (Nd) and average speed feedback signal (Nc) utilizing a variable transformation, and mathematically decouples the forward blade pitch angle command (BetaF) and aft rotor blade pitch angle command (BetaA) into differential blade pitch angle command (BetaD) and average blade pitch angle command (BetaC) utilizing a variable transformation.

8. A counter-rotating open-rotor gas turbine engine comprising:

a forward un-ducted rotor including a plurality of forward rotor blades and including a forward rotor angle actuator for setting blade pitch angles of the plurality of forward rotor blades;

an aft un-ducted rotor including a plurality of aft rotor blades and including an aft rotor angle actuator for setting blade pitch angles of the plurality of aft rotor blades;

a differential gearbox mechanically coupled between the forward and aft un-ducted rotors so that rotor speeds of the respective forward and aft un-ducted rotors are coupled for a given input torque; and

an open rotor control system including forward and aft output signals respectively electrically coupled to the forward rotor angle actuator and the aft rotor angle actuator, and receiving forward and aft feedback input signals;

the open rotor control system including a control algorithm that mathematically decouples the forward and aft output signals into differential and average output signals and mathematically decouples the forward and aft feedback input signals into differential and average feedback input signals.

9. The counter-rotating open-rotor gas turbine engine of clause 8, wherein the open rotor control system includes single-input-single-output (SISO) regulators receiving the differential and average feedback input signals, respectively and outputting the differential and average output signals.

10. The counter-rotating open-rotor gas turbine engine of clause 8, wherein:

the forward and aft output signals include a forward blade pitch angle command and an aft blade pitch angle command;

the forward and aft feedback input signals include a forward rotor speed reference signal and an aft rotor speed reference signal; and

the differential feedback input signal is a differential speed reference signal and the average speed feedback input signal is an average speed reference signal; and

the differential output signal is a differential blade pitch angle command and the average output signal is an average blade pitch angle command.

11. The counter-rotating open-rotor gas turbine engine of clause 8, wherein the open rotor control system treats fuel flow impact on rotor speeds as a known disturbance and is rejected by the control algorithm.

12. The counter-rotating open-rotor gas turbine engine of clause 8, further comprising a speed phase synchronizing control architecture positioned between (a) at least one of the forward and aft output signals and (b) at least one of the forward and aft feedback input signals.

13. The counter-rotating open-rotor gas turbine engine of clause 8, wherein the control algorithm mathematically decouples the forward and aft output signals into differential and average output signals utilizing a variable transformation and mathematically decouples the forward and aft feedback input signals into differential and average feedback input signals utilizing a variable transformation.

14. A method for controlling a counter-rotating open-rotor gas turbine engine that includes, (a) a forward un-ducted rotor including a plurality of forward rotor blades and including a forward rotor angle actuator for setting blade pitch angles of the plurality of forward rotor blades, (b) an aft un-ducted rotor including a plurality of aft rotor blades and including an aft rotor angle actuator for setting blade pitch angles of the plurality of aft rotor blades, (c) a differential gearbox mechanically coupled between the forward and aft un-ducted rotors so that rotor speeds of the respective forward and aft un-ducted rotors are coupled for a given input torque, the method comprising steps of:

> generating forward and aft control signals respectively for the forward rotor angle actuator and the aft rotor angle actuator; and

> receiving forward and aft feedback input signals;

> wherein the step of generating the forward and aft control signals utilizes a control solution that mathematically decouples the forward and aft control signals into differential and average control signals and mathematically decouples the forward and aft feedback input signals into differential and average feedback input signals.

15. The method of clause 14, wherein the differential and average control signals are generated by a single-input-single-output (SISO) regulator based at least upon the differential and average feedback input signals.

16. The method of clause 14, wherein:

> the forward and aft output signals include a forward blade pitch angle command and an aft blade pitch angle command;

> the forward and aft feedback input signals include a forward rotor speed reference signal and an aft rotor speed reference signal; and

> the differential feedback input signal is a differential speed reference signal and the average speed feedback input signal is an average speed reference signal; and

the differential output signal is a differential blade pitch angle command and the average output signal is an average blade pitch angle command.

17. The method of clause 14, further comprising the step of rejecting fuel flow impact on rotor speeds as a known disturbance.

18. The method of clause 14, further comprising the step of providing a speed phase synchronizing control architecture positioned between (a) at least one of the forward and aft output signals and (b) at least one of the forward and aft feedback input signals.

19. The method of clause 14, wherein the control solution mathematically decouples the forward and aft output signals into differential and average output signals utilizing a variable transformation and mathematically decouples the forward and aft feedback input signals into differential and average feedback input signals utilizing a variable transformation.

**Claims**

1. A counter-rotating open-rotor gas turbine engine comprising:

> a forward un-ducted rotor (15) including a plurality of forward rotor blades and including a forward rotor angle actuator (14) for setting blade pitch angles of the plurality of forward rotor blades;
> an aft un-ducted rotor (13) including a plurality of aft rotor blades and including an aft rotor angle actuator (12) for setting blade pitch angles of the plurality of aft rotor blades;
> a differential gearbox mechanically (17) coupled between the forward and aft un-ducted rotors (15, 13) so that rotor speeds of the respective forward and aft un-ducted rotors (15, 13) are coupled for a given input torque;
> a gas turbine engine (10) driving the differential gearbox (17) and including a fuel actuator (16) for setting the fuel flow to the gas turbine engine (10); and
> an open rotor control system (18, 20) including, a forward rotor blade pitch angle command (BetaF) electrically connected to the forward rotor angle actuator (14), an aft rotor blade pitch angle command (BetaA) electrically connected to the aft rotor angle actuator (12), a fuel flow command (Wf) electrically connected to the fuel actuator (16), a forward rotor speed feedback signal (Nf), an aft rotor speed feedback signal (Na), and two engine pressure measurement feedback signals for calculating engine pressure ratio (EPR);
the open rotor control system (18, 20) including a control algorithm that mathematically decouples the forward rotor speed reference signal (NfR) and aft rotor speed reference signal (NaR) into differential speed reference signal (NdR) and average speed reference signal (NcR) and decouples the forward rotor speed feedback signal (Nf) and aft rotor speed feedback signal (Na) into differential speed feedback signal (Nd) and average speed feedback signal (Nc) and mathematically decouples the forward blade pitch angle command (BetaF) and aft rotor blade pitch angle command (BetaA) into differential blade pitch angle command (BetaD) and average blade pitch angle command (BetaC).

2.  The counter-rotating open-rotor gas turbine engine of claim 1, wherein the open rotor control system (18, 20) includes:

    a differential speed regulator (24) having an input of the differential speed feedback signal (Nd) and an output of the differential blade pitch angle command (BetaD); and
    an average speed regulator (26) having an input of the average speed feedback signal (Nc) and an output of the average blade pitch angle command (BetaC).

3.  The counter-rotating open-rotor gas turbine engine of claim 2, wherein the open rotor control system (18, 20) converts the differential blade pitch angle command (BetaD) and average blade pitch angle command (BetaC) into the forward rotor angle blade pitch angle command (BetaF) and the aft rotor blade pitch angle command (BetaA).

4.  The counter-rotating open-rotor gas turbine engine of either of claim 2 or 3, wherein the differential speed regulator (24) and the average speed regulator (26) are single-input-single-output (SISO) regulators.

5.  The counter-rotating open-rotor gas turbine engine of claim 4, wherein the open rotor control system (18, 20) further includes a speed phase synchronizing control architecture (40) positioned between (a) forward and aft rotor phase output signals and (b) input signals to one or more of the differential and average speed regulators (24, 26).

6.  The counter-rotating open-rotor gas turbine engine of any of claims 2 to 5, wherein control algorithm of the open rotor control system (18, 20) treats the fuel flow impact on rotor speeds as a known disturbance and rejected by the average speed regulator (26).

7.  The counter-rotating open-rotor gas turbine engine of any of the preceding claims, wherein the control algorithm mathematically decouples the forward rotor speed reference signal (NfR) and aft rotor speed reference signal (NaR) into differential speed reference signal (NdR) and average speed reference signal (NcR) utilizing a variable transformation, and mathematically decouples the forward rotor speed feedback signal (Nf) and aft rotor speed feedback signal (Na) into differential speed feedback signal (Nd) and average speed feedback signal (Nc) utilizing a variable transformation, and mathematically decouples the forward blade pitch angle command (BetaF) and aft rotor blade pitch angle command (BetaA) into differential blade pitch angle command (BetaD) and average blade pitch angle command (BetaC) utilizing a variable transformation.

8.  A counter-rotating open-rotor gas turbine engine comprising:

    a forward un-ducted rotor (15) including a plurality of forward rotor blades and including a forward rotor angle actuator (14) for setting blade pitch angles of the plurality of forward rotor blades;
    an aft un-ducted rotor (13) including a plurality of aft rotor blades and including an aft rotor angle actuator (12) for setting blade pitch angles of the plurality of aft rotor blades;
    a differential gearbox (17) mechanically coupled between the forward and aft un-ducted rotors (15, 13) so that rotor speeds of the respective forward and aft un-ducted rotors are coupled for a given input torque; and
    an open rotor control system (18, 20) including forward and aft output signals respectively electrically coupled to the forward rotor angle actuator (14) and the aft rotor angle actuator (12), and receiving forward and aft feedback input signals;
    the open rotor control system (18, 20) including a control algorithm that mathematically decouples the forward and aft output signals into differential and average output signals and mathematically decouples the forward and aft feedback input signals into differential and average feedback input signals.

9.  The counter-rotating open-rotor gas turbine engine of claim 8, wherein the open rotor control system (18, 20) includes single-input-single-output (SISO) regulators (24, 26) receiving the differential and average feedback input signals, respectively and outputting the differential and average output signals.

10. The counter-rotating open-rotor gas turbine engine of either of claim 8 or 9, wherein:

the forward and aft output signals include a forward blade pitch angle command and an aft blade pitch angle command;

the forward and aft feedback input signals include a forward rotor speed reference signal and an aft rotor speed reference signal; and

the differential feedback input signal is a differential speed reference signal and the average speed feedback input signal is an average speed reference signal; and

the differential output signal is a differential blade pitch angle command and the average output signal is an average blade pitch angle command.

11. A method for controlling a counter-rotating open-rotor gas turbine engine that includes, (a) a forward un-ducted rotor (15) including a plurality of forward rotor blades and including a forward rotor angle actuator (14) for setting blade pitch angles of the plurality of forward rotor blades, (b) an aft un-ducted rotor (13) including a plurality of aft rotor blades and including an aft rotor angle actuator (12) for setting blade pitch angles of the plurality of aft rotor blades, (c) a differential gearbox (17) mechanically coupled between the forward and aft un-ducted rotors (15, 13) so that rotor speeds of the respective forward and aft un-ducted rotors are coupled for a given input torque, the method comprising steps of:

generating forward and aft control signals respectively for the forward rotor angle actuator (15) and the aft rotor angle actuator (13); and receiving forward and aft feedback input signals; wherein the step of generating the forward and aft control signals utilizes a control solution that mathematically decouples the forward and aft control signals into differential and average control signals and mathematically decouples the forward and aft feedback input signals into differential and average feedback input signals.

12. The method of claim 11, wherein the differential and average control signals are generated by a single-input-single-output (SISO) regulator based at least upon the differential and average feedback input signals.

13. The method of either of claim 11 or 12, wherein:

the forward and aft output signals include a forward blade pitch angle command and an aft blade pitch angle command;

the forward and aft feedback input signals include a forward rotor speed reference signal and an aft rotor speed reference signal; and

the differential feedback input signal is a differential speed reference signal and the average speed feedback input signal is an average speed reference signal; and

the differential output signal is a differential blade pitch angle command and the average output signal is an average blade pitch angle command.

14. The method of any of claims 11 to 13, further comprising the step of rejecting fuel flow impact on rotor speeds as a known disturbance.

15. The method of any of claims 11 to 14, further comprising the step of providing a speed phase synchronizing control architecture (40) positioned between (a) at least one of the forward and aft output signals and (b) at least one of the forward and aft feedback input signals.

16. The method of any of claims 11 to 15, wherein the control solution mathematically decouples the forward and aft output signals into differential and average output signals utilizing a variable transformation and mathematically decouples the forward and aft feedback input signals into differential and average feedback input signals utilizing a variable transformation.

FIG. 1

EP 2 623 711 A2

FIG. 2

FIG. 5

FIG. 6

FIG. 7